# EUROPEAN PATENT SPECIFICATION

(11) **EP 0 635 043 B1**
(45) Date of publication and mention of the grant of the patent: **12.06.1996**
(21) Application number: 93909085.8
(22) Date of filing: 05.04.1993
(51) Int. Cl.: C09C 1/48, C01B 3/24

(54) **ELECTRODE CONSUMPTION IN PLASMA TORCHES**
ELEKTRODENVERBRAUCH IN PLASMAFACKELN
CONSOMMATION D'ELECTRODES DANS LES TORCHES A PLASMA

(30) Priority: 07.04.1992 NO 921361
(43) Date of publication of application: 25.01.1995
(73) Proprietor: KVAERNER ENGINEERING A/S, N-1324 Lysaker (NO)
(72) Inventor: LYNUM, Steinar, N-0284 Oslo (NO); HOX, Ketil, N-7021 Trondheim (NO); MYKLEBUST, Nils, N-7030 Trondheim (NO); HUGDAHL, Jan, N-7017 Trondheim (NO)
(74) Representative: Baverstock, Michael George Douglas
(86) International application number: NO9300055
(87) International publication number: WO9320151

(56) References cited:
- DD-A- 292 920
- GB-A- 1 400 266

## Description

The invention relates to a method for the reduction of electrode consumption in plasma torches in the processing and decomposition of hydrocarbons.

From DD 292 920 is known a method of producing high quality carbon black by pyrolysis of hydrocarbons in a plasma reactor. The hydrocarbon stock can be gaseous, liquid or solid. The plasma can be formed by hydrogen or an inert gas such as argon, or by a mixture of hydrogen and a hydrocarbon gas, or by hydrocarbon gas alone. However, it is not disclosed that the use of a mixture of hydrocarbon gas and hydrogen gas as a plasma-forming gas will reduce or have any effect on the electrode consumption in the plasma reactor.

From GB 1 400 266 is known a method of producing carbon black by pyrolysis of hydrocarbons in a plasma reactor. The apparatus consists of two electrodes located coaxially opposite each other. Hydrocarbons in a gaseous state is supplied for the formation of a plasma. Further, in order more fully to utilize the heat of the plasma and increase the yield, hydrocarbons can also be fed further down in the reaction chamber. However, it is not disclosed that the use of hydrocarbon gas as a plasma gas will reduce or have any effect on the electrode consumption in the plasma reactor.

In the processing and decomposition of natural gas in a plasma torch a consumption of electrodes will take place which results in the need to have these replenished or replaced after a period of use. This consumption is undesirable since the consumption causes a shutdown of the process, which can be time consuming and which constitutes a break in production in addition to the consumption of expensive electrode material.

One alternative has been the use of renewable electrodes of graphite or carbonaceous material which can be continuously replenished and do not pollute the decomposition products. This will be cheaper than the use of non-consumable electrodes which are more complicated and more expensive in addition to their polluting the products.

The object of the invention is to provide a method for reducing the electrode material in plasma torches intended for the decomposition and processing of hydrocarbons regardless of whether the electrodes are composed of renewable or consumable electrodes.

This object is achieved by a method which is characterized by the features in the patent claims presented.

The surprising discovery has been made that the hydrocarbons which are to be decomposed in the torch can be utilized in order to achieve a reduction in the electrode consumption by mixing these into the actual plasma gas. By adding the hydrocarbons directly to the plasma gas, the former are decomposed into hydrogen and carbon black in the actual flame zone where the electrode consumption takes place, and the produced carbon black is deposited in the same area in which the consumption occurs. In this manner a growth is obtained on the electrodes which entirely or partially can compensate for the consumption, thus causing the life of the electrodes to be manifestly extended.

By controlling the quantity of admixture of hydrocarbons, e.g. methane, and possibly also the introduction area for the gas and its temperature, it will be possible to control the deposit on the electrodes and thereby achieve this favourable effect.

This utilization of "fouling" on the electrodes as an advantageous effect is most surprising. Until now one of the greatest problems in the operation of plasma torches has been this very fouling on the electrodes during the decomposition. By proceeding according to the invention, however, this fouling effect is controlled and guided into a desired area by mixing natural gas with the actual plasma gas. Thus the life of the electrode can thereby be increased without the necessity of resorting to expensive means, since an available, reasonably priced natural gas is utilized. A particularly favourable effect is obtained if hydrogen is used in advance as plasma gas, in order to ensure that no change takes place in the composition of the plasma gas due to after-growth.

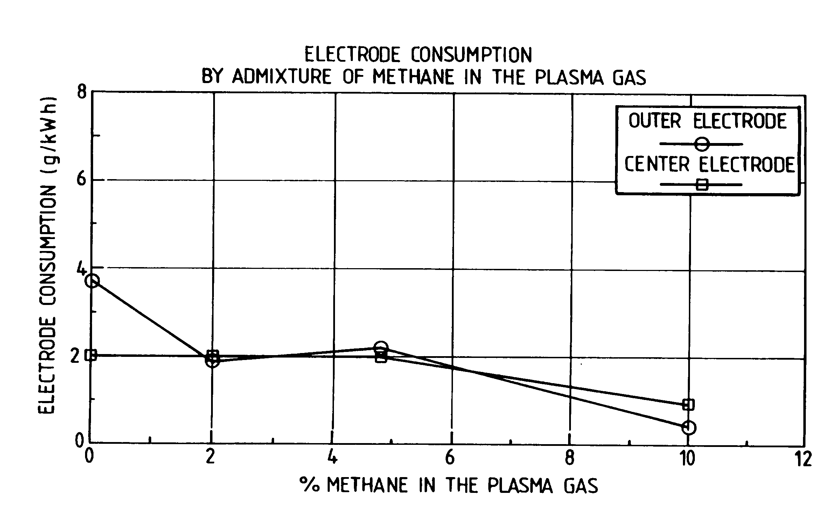

Trials have been carried out both with copper and graphite electrodes in which the same effect has been achieved for both types of electrodes. The effect obtained from the applicant's own experiments is described in the drawing, which shows electrode consumption as a function of % methane mixed with the hydrogen plasma gas.

Thus a considerable improvement in the operation of plasma torches has been achieved in a simple manner by the invention. A further advantage which is obtained is that the heating load on the electrodes can be reduced by the admixture of hydrocarbon gas, an effect which is particularly pronounced when hydrogen is used as plasma gas*.*

The electrode consumption in the case of carbon electrodes for the production of pure decomposition products from hydrocarbon gas can therefore be partially or entirely reduced by means of the invention with a guided and controlled admixture of hydrocarbon gas into the plasma gas. In order to be able to control the growth of the electrode at the consumption point the amount of admixture of natural gas can be appropriately regulates on the basis of control parameters which are calculated on the basis of the arc voltage of the plasma torch.

## Claims

1. A method for the reduction of electrode consumption in plasma torches during the processing and decomposition of hydrocarbons for the production of carbon black and hydrogen, especially from natural gas or methane, and where hydrogen is supplied to the plasma torch as a plasma-forming gas, characterized in that into the plasma-forming gas from 2 to 10% of methane are mixed and the amount of admixture of methane is controlled according to the electrode consumption calculated on the basis of operation parameters of the arc of the plasma torch.

2. A method according to claim 1, characterized in that the methane is preheated to a certain temperature.

3. A method according to claim 1, characterized in that the methane is introduced into the plasma gas by means of separate lead-in pipes.

4. A method according to claim 1, characterized in that methane is added to the plasma gas for the reduction of the heating load on the electrodes.

## Patentansprüche

1. Verfahren zur Reduktion des Elektrodenverbrauches bei Plasmabrennern während der Verarbeitung und Zersetzung von Kohlenwasserstoffen, insbesondere von Naturgas oder Methan, für die Herstellung von Russ und Wasserstoff, wobei Wasserstoff als plasmabildendes Gas dem Plasmabrenner zugeführt wird, dadurch gekennzeichnet, dass dem plasmabildenden Gas 2 bis 10% Methan zugemischt werden und die Menge der Methanzumischung entsprechend dem aufgrund von Verfahrensparametern des Bogens des Plasmabrenners berechneten Elektrodenverbrauch kontrolliert wird.

2. Verfahren nach Anspruch 1, dadurch gekennzeichnet, dass das Methan auf eine bestimmte Temperatur vorgewärmt wird.

3. Verfahren nach Anspruch 1, dadurch gekennzeichnet, dass das Methan mittels getrennter Einführleitungen zugeführt wird.

4. Verfahren nach Anspruch 1, dadurch gekennzeichnet, dass Methan dem Plasmagas zugegeben wird, um die Wärmelast auf den Elektroden zu vermindern.

## Revendications

1. Procédé pour réduire la consommation d'électrodes dans des torches à plasma pendant le traitement et la décomposition d'hydrocarbures pour la production de noir de carbone et d'hydrogène, en particulier à partir de gaz naturel ou de méthane, et selon lequel de l'hydrogène est envoyé à la torche à plasma en tant que gaz de formation du plasma, caractérisé en ce que l'on mélange 2 à 10 % de méthane dans le gaz de formation du plasma et que l'on commande la quantité de méthane mélangé en fonction de la consommation des électrodes calculée sur la base de paramètres de fonctionnement de l'arc de la torche à plasma.

2. Procédé selon la revendication 1, caractérisé en ce que le méthane est préchauffé à une certaine température.

3. Procédé selon la revendication 1, caractérisé en ce que le méthane est introduit dans le gaz de formation du plasma au moyen de canalisations d'introduction séparées.

4. Procédé selon la revendication 1, caractérisé en ce que l'on ajoute du méthane au gaz de formation du plasma pour réduire la charge de chauffage appliquée aux électrodes.
